# EUROPÄISCHE PATENTSCHRIFT

(11) **EP 0 736 358 B1**
(45) Veröffentlichungstag und Bekanntmachung des Hinweises auf die Patenterteilung: **01.08.2001**
(21) Anmeldenummer: 96102141.7
(22) Anmeldetag: 14.02.1996
(51) Int. Cl.: B23P 15/18, B30B 15/06, F16D 65/092

(54) **Vorrichtung zum Heissverkleben eines Bleches mit einer Unterlage**
Apparatus for heating-bonding sheet metal to a support
Dispositif pour le collage à chaud d'une tôle sur un support

(30) Priorität: 08.04.1995 DE 29506121 U
(43) Veröffentlichungstag der Anmeldung: 09.10.1996
(73) Patentinhaber: Rütgers Automotive Aktiengesellschaft, 45356 Essen (DE)
(72) Erfinder: Fryder, Johannes Bernhard, D-45657 Recklinghausen (DE); Jenniges, Norbert, D-45479 Mülheim (DE); Lauth, Oliver, D-45145 Essen (DE)
(74) Vertreter: Zenz, Joachim Klaus, Dipl.-Ing.

(56) Entgegenhaltungen:
- FR-A- 1 592 833
- US-A- 2 627 628
- US-A- 4 156 589
- US-A- 4 600 455
- PATENT ABSTRACTS OF JAPAN vol. 14, no. 407 (M-1019) & JP-A-02 155641 (KOBE STEEL)

## Beschreibung

Die Erfindung betrifft eine Vorrichtung zum volldachigen Aufkleben eines mit einem Heißkleber beschichteten Bleches auf eine Unterlage, insbesondere zum Aufkleben eines Dämpfungsbleches auf die Trägerplatte eines Bremsbelages.

Es ist bekannt, mit Heißklebern beschichtete Dämpfungsbleche mit einem Druck von etwa 50 daN/cm² bei Temperaturen zwischen 150 und 250°C mittels einer beheizten, starren Druckplatte in einer Presse auf die Stahlträgerplatte eines Bremsbelages aufzupressen und so beide Teile zu verkleben. Wegen der verarbeitungsbedingten Welligkeit der Trägerplatte und der geringen Schichtdicke des Klebers von etwa 0,01 mm erfolgt die Verklebung jedoch nur mit den erhabenen Bereichen der Trägerplattenoberfläche. Infolge dessen kann es bei der späteren Verwendung des Belages zu einer Ablösung des Bleches kommen. Aus diesem Grunde werden die Dämpfungsbleche auf der Trägerplatte durch zusätzliche Verklammerungen gesichert. Derartige zusätzliche Verklammerungen erfordern einen erheblichen Mehraufwand bei der Herstellung der Beläge.

Der Erfindung liegt daher die Aufgabe zugrunde, eine Vorrichtung zu entwickeln, die eine vollflächige Heißverklebung eines Bleches mit einer welligen Unterlagen-Oberfläche ermöglicht.

Diese Aufgabe wird erfindungsgemäß gelöst durch eine Vorrichtung mit den Merkmalen des Patentanspruchs 1.

Aus der US-A-2627628 ist eine Formplatte zum Formen thermoplastischen Materials bekannt, bei der in einer beheizbaren und kühlbaren Formplatte eine Ausnehmung vorgesehen ist, die mit einer Metallmembran abgeschlossen und abgedichtet ist. Die Ausnehmung ist vollständig mit einer eutektischen Legierung gefüllt, die einen niedrigen Schmelzpunkt unter etwa 150°C hat und die einen nahe Null gelegenen Ausdehungskoeffizienten hat. Dadurch kann sich das beheizte Kissen an Unebenheit in der Packung des zu formenden Materials anpassen und ohne Formänderung beim Kühlen des Formteils dessen Wärme abführen. Eine Anwendung eines Formkissens auf das Aufkleben eines Bleches auf eine Unterlage und die bauliche Zuordnung zu einem bewegten Stempel ist dieser bereits seit mehr als 40 Jahren bekannten Druckschrift nicht zu entnehmen.

Als Metall-Legierung sind insbesondere Zinnlegierungen mit Wismut und/oder Blei geeignet. Weitere Legierungskomponenten wie Indium und Kadmium können ebenfalls in der Legierung vorhanden sein. Der Schmelzpunkt der Legierung muß so eingestellt sein, daß er unter dem Erweichungspunkt des Schmelzklebers liegt, damit die Legierung bei der Preßtemperatur in flüssigem Zustand vorliegt.

Es hat sich herausgestellt, daß durch die erfindungsgemäße Druckplatte eine gleichmäßige Druckverteilung erreicht wird und die Unebenheiten der Trägerplattenoberfläche durch entsprechende Verformung des Dämpfungsbleches ausgeglichen werden, so daß eine vollflächige Verklebung erreicht wird. Die Schmelzwärme wird beim Aufpressen des Bleches über das Blech in die Kleberschicht mit eingebracht, ohne daß der Belag mit erhitzt werden muß, wie es beispielsweise bei der Verwendung einer elastischen Zwischenschicht aus temperaturbeständigem Gummi erforderlich wäre. Dies führt zu einer erheblichen Energieeinsparung.

Um das Einfüllen der Legierung in den Hohlraum zu erleichtern, ist es sinnvoll, die Metallplatte mit mindestens einer Bohrung zu versehen, die von außen bis in den Hohlraum reicht und mit einem Stopfen, z.B. einem Schraubstopfen, verschlossen werden kann, damit der Hohlraum ohne Gaseinschlüsse gefüllt werden kann. Es ist zwar auch möglich die Legierung vor dem Aufbringen der Membran in den Hohlraum zu füllen. Dann besteht allerdings die Gefahr, daß Schutzgase oder Luft mit eingeschlossen werden und sich negativ auf die Temperaturverteilung auswirken können.

Die Membran sollte aus einem Metall mit niedriger Streckgrenze aber hoher Bruchdehnung bestehen. Bei einer Stahlkonstruktion der Druckplatte kann die Membran aus einem Tiefziehblech, insbesondere Tiefbruch-Stahlblech bestehen, das eine Dicke von 0,1 bis 2,0 mm hat.

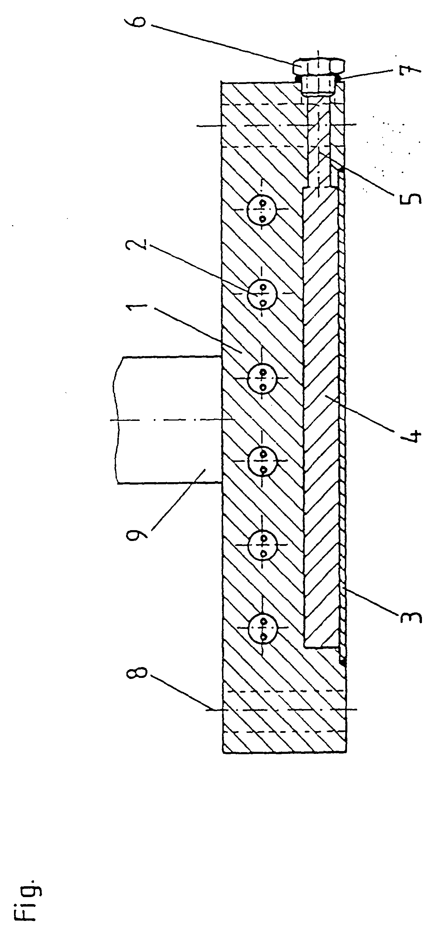

Die Erfindung wird im folgenden anhand eines in der Zeichnung schematisch dargestellten Ausführungsbeispiels näher erläutert.

Die einzige Figur zeigt eine Schnittansicht einer Druckplatte, die eine erfindungsgemäße Ausbildung hat. Die Druckplatte weist eine Stahlplatte 1 aus St 52 mit elektrischen Heizstäben 2 auf. Auf einer Seite der Stahlplatte 1 greift ein Druckstempel 9 an; auf der gegenüberliegenden Seite ist eine Membran 3 eingelassen. Letztere ist an ihren Rändern mit der Stahlplatte 1 dicht verschweißt. Sie ist 1 mm dick und besteht aus St. 1. Zwischen der Membran 3 und der Stahlplatte 1 befindet sich ein Hohlraum 4, in den über eine Bohrung 5 eine bei 130°C schmelzende Blei-Zinn-Legierung eingefüllt ist. Die Bohrung 5 ist mit einem Gewindestopfen 6 und einer Dichtung 7 verschlossen. Die Stahlplatte 1 ist außerdem an den Ecken mit vier Bohrungen 8 versehen, die zur Befestigung der Druckplatte an dem Druckstempel 9 der Presse dienen.

Wenn die Metallplatte aus Messing oder Bronze gefertigt ist, kann die Membran auch aus Kupferblech gefertigt und mit der Metallplatte hart verlötet sein.

## Patentansprüche

1. Vorrichtung zum Heißverkleben eines Bleches mit einer Unterlage, genannte Vorrichtung enthaltend eine Presse, die eine beheizbare Druckplatte und einen mit dieser verbundenen Druckstempel (9) aufweist,
wobei die Druckplatte aus einer starren Metallplatte (1) mit Heizung (2) und einer damit auf der der Druckstempelseite gegenüberliegenden Seite dicht verbundenen Metallmembran (3) besteht, wobei sich zwischen der Platte (1) und der Membran (3) ein geschlossener Hohlraum (4) befindet, der mit einer niedrig schmelzenden Metall-Legierung gefüllt ist, deren Schmelztemperatur bei höchstens 175°C liegt.

2. Vorrichtung nach Anspruch 1, dadurch gekennzeichnet, daß die Metall-Legierung eine Zinnlegierung mit Wismut und/oder Blei ist.

3. Vorrichtung nach Anspruch 1 oder 2, dadurch gekennzeichnet, daß die Metallplatte (1) mit einer in den Hohlraum (4) mündenden Bohrung (5) versehen ist, die außen mit einem Stopfen (6) verschlossen ist.

4. Vorrichtung nach einem der Ansprüche 1 bis 3, dadurch gekennzeichnet, daß als Metallplatte (1) eine Stahlplatte vorgesehen ist, und daß die Metallmembran (3) aus Tiefzieh-Stahlblech einer Dicke im Bereich von 0,1 bis 2,0 mm besteht und an ihrem Rande mit der Stahlplatte (1) dicht verschweißt ist.

## Claims

1. Apparatus for hot bonding a metal sheet to a support, the said apparatus including a press which has a heatable pressure plate and a ram (9) connected to it, wherein the pressure plate comprises a rigid metal plate (1) with a heater (2) and a metal membrane (3) sealingly connected to it on the side remote from the ram, whereby situated between the plate (1) and the membrane (3) there is a sealed space (4), which is filled with a low-melting metal alloy, the melting temperature of which is at most 175°C.

2. Apparatus as claimed in claim 1, characterised in that the metal alloy is a tin alloy with bismuth and/or lead.

3. Apparatus as claimed in claim 1 or 2, characterised in that the metal plate (1) is provided with a bore (5), which communicates with the space (4) and is closed externally with a plug (6).

4. Apparatus as claimed in one of claims 1 to 3, characterised in that a steel plate is provided as the metal plate (1) and that the metal membrane (3) comprises deep drawn steel plate with a thickness in the range of 0.1 to 2.0mm and is sealingly welded at its edge to the steel plate (1).

## Revendications

1. Dispositif de collage à chaud d'une tôle à un support, ledit dispositif contenant une presse qui présente une plaque de pression pouvant être chauffée et un piston de pression (9) joint à celle-ci, la plaque de pression étant constituée d'une plaque métallique rigide (1) avec dispositif de chauffage (2) et d'une membrane métallique (3) jointe de manière étanche à celle-ci sur le côté qui fait face au côté piston de pression, entre la plaque (1) et la membrane (3) se trouvant une cavité fermée (4) qui est remplie d'un alliage métallique à bas point de fusion dont la température de fusion est d'au plus 175 °C.

2. Dispositif selon la revendication 1, caractérisé par le fait que l'alliage métallique est un alliage d'étain avec du bismuth et/ou du plomb.

3. Dispositif selon l'une des revendications 1 et 2, caractérisé par le fait que la plaque métallique (1) est pourvue d'un trou (5) qui débouche dans la cavité (4) et est bouché extérieurement par un bouchon (6).

4. Dispositif selon l'une des revendications 1 à 3, caractérisé par le fait que comme plaque métallique (1) est prévue une plaque d'acier, et que la membrane métallique (3) est en tôle d'acier pour emboutissage profond de 0,1 à 2,0 mm d'épaisseur et est soudée de manière étanche sur son bord à la plaque d'acier (1).
